# EUROPEAN PATENT APPLICATION

(11) **EP 4 667 643 A1**
(43) Date of publication of application: **24.12.2025**
(21) Application number: 24788911.6
(22) Date of filing: 15.03.2024
(51) Int. Cl.: D06F 39/10, D06F 58/22, B01D 46/00

(54) **FILTER ASSEMBLY AND CLOTHING TREATMENT APPARATUS COMPRISING SAME**

(30) Priority: 10.04.2023 KR 20230046748
(71) Applicant: Samsung Electronics Co., Ltd., Suwon-si, Gyeonggi-do 16677 (KR)
(72) Inventor: AHN, Jiwoon, Suwon-si Gyeonggi-do 16677 (KR); KIM, Zoohyeong, Suwon-si Gyeonggi-do 16677 (KR); PARK, Jinseok, Suwon-si Gyeonggi-do 16677 (KR); BAEK, Kwanwoo, Suwon-si Gyeonggi-do 16677 (KR)
(74) Representative: Walaski, Jan Filip
(86) International application number: PCT/KR2024/003316
(87) International publication number: WO 2024/214968

(57) **Abstract**

A filter assembly 1 disposed in an air discharge pipe 150 of a clothing treatment apparatus 100 includes: a cap 10 fixed to a housing 110 of the clothing treatment apparatus 100 and connected to one end of the air discharge pipe 150; a filter 60 disposed in the cap 10 and configured to filter and block foam and moisture vapor; and a flow switching cover 70 detachably disposed in the cap 10 and configured to switch a flow direction of air passing through the filter 60.

## Description

### [Technical Field]

The disclosure relates to a clothing treatment apparatus, and more particularly, to a filter assembly used in a clothing treatment apparatus.

### [Background Art]

Generally, a clothing treatment apparatus may include a washing machine, a dryer-combined washing machine, a dryer, etc.

While the clothing treatment apparatus is processing the clothing, washing foam or moisture vapor may be generated.

When washing foam or moisture vapor is generated, the pressure inside the tub of the clothing treatment apparatus increases, and the vibration of the tub increases due to the increased pressure. When the vibration of the tub increases, the door of the clothing treatment apparatus may vibrate.

In order to eliminate this vibration, an air discharge pipe is installed to connect the tub and the outside of the clothing treatment apparatus.

Through the air discharge pipe, the washing foam or moisture vapor inside the tub may be discharged to the outside with air. When the washing foam or moisture vapor inside the tub is discharged to the outside together with air, the pressure inside the tub decreases, so the vibration of the tub and the door may be reduced.

### [Disclosure of Invention]

### [Technical Problem]

An aspect of the disclosure relates to provide a filter assembly that discharges air to the outside of a clothing treatment apparatus and prevents and/or reduces washing foam and moisture vapor from being discharged, and a clothing treatment apparatus having such a filter assembly.

### [Technical Solution]

According to an aspect of the disclosure, a filter assembly may include: a cap fixed to a housing of the clothing treatment apparatus having an air discharge pipe and connected to one end of the air discharge pipe; a filter disposed in the cap and configured to filter and block foam and moisture vapor; and a flow switching cover detachably disposed in the cap and configured to change a flow direction of air passing through the filter.

The cap may include a connecting pipe coupled with the air discharge pipe; a flange extending outward from one end of the connecting pipe and secured to the housing; and a plurality of hooks formed on one surface of the flange in a direction opposite to the connecting pipe.

The flow switching cover may include a switching plate facing the flange; a side wall formed perpendicular to an edge of the switching plate; and a plurality of hook coupling portions extending from the switching plate in a same direction as the side wall and to which the plurality of hooks are coupled.

The cap may include a cap fixing part that fixes the filter. The flow switching cover may include a cover support portion supporting the filter. The filter may be positioned between the cap fixing part and the cover support portion.

The cap fixing part may include a lower cap fixing part configured to fix a lower portion of the filter; and an upper cap fixing part configured to fix an upper portion of the filter.

The cap may include an inner leak-blocking portion extending from the flange in an opposite direction to the connecting pipe.

The cap may include an outer leak-blocking portion extending from an outer circumferential surface of the flange in a same direction as the inner leak-blocking portion.

The inner leak-blocking portion may include a leak-blocking bump provided at a leading end of the inner leak-blocking portion.

The flow switching cover may include a support bump formed at a lower end of the cover support portion and corresponding to the leak-blocking bump.

The cap fixing part may be formed on an inner surface of the connecting pipe. The flow switching cover may include a cover leak blocking portion provided at a lower end of the cover support portion.

The cover support portion may include a plurality of support plates disposed in parallel at regular intervals.

Two outermost support plates of the plurality of support plates may include bending portions provided at leading ends of the two outermost support plates.

The upper cap fixing part may include an upper fixing rib and a sub-fixing rib. According to an aspect of the disclosure, a clothing treatment apparatus may include: a housing including a cap hole; a tub disposed inside the housing and including an air hole; a filter assembly including any one of the above-described features disposed in the cap hole of the housing; and an air discharge pipe connecting the filter assembly and the air hole of the tub.

### [Brief Description of Drawings]

These and/or other aspects, features, and advantages of certain embodiments of the disclosure will be more apparent from the following description taken in conjunction with the accompanying drawings, in which:
FIG. 1 is a perspective view illustrating a clothing treatment apparatus according to one or more embodiments of the disclosure.
FIG. 2 is a perspective view illustrating an air discharge pipe 150 and a filter assembly 1 of a clothing treatment apparatus according to one or more embodiments of the disclosure.
FIG. 3 is a partial perspective view illustrating a cap hole 111 provided in a housing of the clothing treatment apparatus of FIG. 2.
FIG. 4 is a perspective view illustrating a filter assembly 1 according to one or more embodiments of the disclosure.
FIG. 5 is a cross-sectional view illustrating a filter assembly 1 according to one or more embodiments of the disclosure.
FIG. 6 is an exploded perspective view illustrating a filter assembly 1 according to one or more embodiments of the disclosure.
FIG. 7 is a perspective view illustrating a cap of a filter assembly 1 according to one or more embodiments of the disclosure.
FIG. 8 is a rear perspective view illustrating a cap of a filter assembly 1 according to one or more embodiments of the disclosure.
FIG. 9 is a front view illustrating a cap of a filter assembly 1 according to one or more embodiments of the disclosure.
FIG. 10 is a perspective view illustrating a flow switching cover 70 of a filter assembly 1 according to one or more embodiments of the disclosure.
FIG. 11 is a front view illustrating a flow switching cover 70 of a filter assembly 1 according to one or more embodiments of the disclosure.
FIG. 12 is a cross-sectional view for explaining an operation of a filter assembly 1 according to one or more embodiments of the disclosure.
FIG. 13 is a perspective view illustrating a filter assembly 1 according to one or more embodiments of the disclosure.
FIG. 14 is a cross-sectional view illustrating a filter assembly 1 according to one or more embodiments of the disclosure.
FIG. 15 is an exploded perspective view illustrating a filter assembly 1 according to one or more embodiments of the disclosure.
FIG. 16 is a perspective view illustrating a cap of a filter assembly 1 according to one or more embodiments of the disclosure.
FIG. 17 is a rear perspective view illustrating a cap of a filter assembly 1 according to one or more embodiments of the disclosure.
FIG. 18 is a perspective view illustrating a flow switching cover 70 of a filter assembly 1 according to one or more embodiments of the disclosure.

### [Best Mode for Carrying out the Invention]

The various embodiments described herein and terms used herein are not intended to limit the technical features described in this disclosure to specific embodiments, but should be understood to include various modifications, equivalents, or alternatives of the embodiments.

In connection with the description of the drawings, similar reference numbers may be used for similar or related components.

The singular form of a noun corresponding to an item may include one or more of the above item, unless the relevant context clearly indicates otherwise.

As used herein, each of phrases such as "A or B," "at least one of A and B," "at least one of A or B," "A, B, or C," "at least one of A, B, and C," "at least one of A, B, C" may include any one of the items listed together with the corresponding phrase, or any possible combination thereof.

The term "and/or" includes any element of a plurality of related described elements or a combination of a plurality of related described elements.

Terms such as "first," "second," "primary," or "secondary" may be used simply to distinguish one component from other components, and do not limit the corresponding components in other respects (e.g., importance or order).

When it is mentioned that one (e.g., first) component is "coupled" or "connected" to another (e.g., second) component with or without terms "functionally" or "communicatively", it means that the one component can be connected to the another component directly (e.g., wired), wirelessly, or through a third component. Terms such as "include" or "have" are intended to designate the presence of features, numbers, steps, operations, components, parts, or combinations thereof described in the embodiment, but do not preclude the presence or addition of one or more other features, numbers, steps, operations, components, parts, or combination thereof.

When a component is said to be "connected," "coupled," "supported," or "in contact" with another component, this means not only cases where the components are directly connected, coupled, supported, or contacted, but also cases where the components are indirectly connected, coupled, supported, or contacted through a third component.

When a component is said to be located "on" other component, this includes not only cases where the component is in contact with the other component, but also cases where another component exits between the two components.

A washing machine according to various embodiments may perform washing, rinsing, dewatering, and drying processes. The washing machine is an example of a clothing treatment apparatus, and the clothing treatment apparatus is a concept encompassing a device for washing clothing (objects to be washed and objects to be dried), a device for drying clothing, and a device capable of washing and drying clothing.

The washing machine according to various embodiments may include a top-loading washing machine in which a laundry inlet for loading laundry into the washing machine or taking out the laundry from the washing machine is provided to face upward, or a front-loading washing machine in which a laundry inlet is provided to face forward. The washing machine according to various embodiments may include a washing machine in another loading type as well as the top-loading washing machine and the front-loading washing machine.

The top-loading washing machine is capable of washing laundry using a water flow generated by a rotating body such as a pulsator. The front-loading washing machine is capable of washing laundry by rotating a drum to repeatedly raise and drop laundry. The front-loading washing machine may include a dryer-combined washing machine capable of drying laundry accommodated in a drum. The dryer-combined washing machine may include a hot air supply device for supplying high-temperature air into the drum and a condensing device for removing moisture in the air discharged from the drum. As an example, the dryer-combined washing machine may include a heat pump device. The washing machine according to various embodiments may include a washing machine using a washing method other than the above-described washing method.

The washing machine according to various embodiments may include a housing accommodating various components therein. The housing may be provided in the form of a box in which a laundry inlet is formed on one side thereof.

The washing machine may include a door for opening and closing the laundry inlet. The door may be mounted on the housing to be rotatable by means of a hinge. At least a partial portion of the door may be transparent or translucent so that the inside of the housing can be seen.

The washing machine may include a tub provided inside the housing to store water. The tub may be provided in a substantially cylindrical shape with a tub opening formed on one side thereof, and disposed inside the housing in such a manner that the tub opening corresponds to the laundry inlet.

The tub may be connected to the housing by a damper. The damper may absorb vibration generated while the drum is rotating to dampen vibration to be transmitted to the housing.

The washing machine may include a drum provided to accommodate laundry.

The drum may be disposed inside the tub in such a manner that a drum opening provided on one side thereof corresponds to the laundry inlet and the tub opening. The laundry may be accommodated in the drum by passing through the laundry inlet, the tub opening, and the drum opening sequentially, or may be taken out of the drum by passing through the drum opening, the tub opening, and the laundry inlet sequentially.

The drum may perform an operation corresponding to a washing, rinsing, and/or dewatering process while rotating inside the tub. A plurality of through holes may be formed in a cylindrical wall of the drum to allow water stored in the tub to flow into or out of the drum.

The washing machine may include a driving device configured to rotate the drum. The driving device may include a driving motor and a rotating shaft for transmitting a driving force generated by the driving motor to the drum. The rotating shaft may pass through the tub and be connected to the drum.

The driving device may perform an operation corresponding to a washing, rinsing, dewatering, and/or drying process by rotating the drum forward or backward.

The washing machine may include a water supply device configured to supply water to the tub. The water supply device may include a water supply pipe and a water supply valve provided at the water supply pipe. The water supply pipe may be connected to an external water supply source. The water supply pipe may extend from the external water supply source to a detergent supply device and/or the tub. Water may be supplied to the tub through the detergent supply device. Water may be supplied to the tub without passing through the detergent supply device.

The water supply valve may open or close the water supply pipe in response to an electrical signal from a control unit. The water supply valve may allow or block supply of water from the external water supply source to the tub. The water supply valve may include, for example, a solenoid valve opened and closed in response to an electrical signal.

The washing machine may include a detergent supply device configured to supply detergent to the tub. The detergent supply device may include a manual detergent supply device that requires a user to input detergent to be used every time for washing, or an automatic detergent supply device that stores a large amount of detergent and automatically inputs a predetermined amount of detergent during washing. The detergent supply device may include a detergent box for storing detergent. The detergent supply device may be configured to supply detergent into the tub during a water supply process. Water supplied through the water supply pipe may be mixed with the detergent via the detergent supply device. The water mixed with the detergent may be supplied into the tub. The detergent is used as a term encompassing pre-washing detergent, main-washing detergent, fabric softener, bleach, etc., and the detergent box may be partitioned into an area for storing the pre-washing detergent, an area for storing the main-washing detergent, an area for storing the fabric softener, and an area for storing the bleach.

The washing machine may include a drainage device configured to discharge water accommodated in the tub to the outside. The drainage device may include a drainpipe extending from the bottom of the tub to the outside of the housing, a drain valve provided at the drainpipe to open and close the drain pipe, and a pump provided on the drain pipe. The pump may pump water in the drainpipe out of the housing.

The washing machine may include a control panel disposed on one side surface of the housing. The control panel may provide a user interface for interaction between the user and the washing machine. The user interface may include at least one input interface and at least one output interface.

The at least one input interface may convert sensory information received from the user into an electrical signal.

The at least one input interface may include a power button, an operation button, a course selection dial (or a course selection button), and a
washing/rinsing/dewatering setting button. For example, the at least one input interface may include a tact switch, a push switch, a slide switch, a toggle switch, a micro switch, a touch switch, a touch pad, a touch screen, a jog dial, and/or a microphone.

The at least one output interface may visually or audibly convey information related to an operation of the washing machine to the user.

For example, the at least one output interface may transmit information related to a washing course, a time for which the washing machine will be operated, and washing/rinsing/dewatering settings to the user. The information related to the operation of the washing machine may be output through a screen, an indicator, or a sound. For example, the at least one output interface may include a liquid crystal display (LCD) panel, a light emitting diode (LED) panel, and a speaker.

The washing machine may include a communication module for communicating with an external device in a wired and/or wireless manner.

The communication module may include at least one of a short-range communication module and a long-range communication module.

The communication module may transmit data to the external device (e.g., a server, a user device, and/or a home appliance) or receive data from the external device. For example, the communication module may establish communication with the server and/or the user device and/or the home appliance, and transmit/receive various types of data.

To this end, the communication module may support establishing a direct communication channel (e.g., a wired communication channel) or a wireless communication channel between the external devices, and performing communication through the established communication channel. According to one or more embodiments, the communication module is a wireless communication module (e.g., a cellular communication module, a short-range wireless communication module, or a global navigation satellite system (GNSS) communication module) or a wired communication module (e.g., a local area network (LAN) communication module or a power line communication module). Among these communication modules, the corresponding communication module may communicate with the external device through a first network (e.g., a short-range communication network such as Bluetooth, wireless fidelity (WiFi) direct, or infrared data association (IrDA)) or a second network (e.g., a long-range communication network such as a legacy cellular network, a 5G network, a next-generation communication network, the Internet, or a computer network (e.g., LAN or WAN)). These various types of communication modules may be integrated into one component (e.g., a single chip) or implemented as a plurality of separate components (e.g., a plurality of chips).

The short-range wireless communication module may include a Bluetooth communication module, a Bluetooth low energy (BLE) communication module, a near field communication module, a WLAN (Wi-Fi) communication module, a Zigbee communication module, infrared data association (IrDA) communication module, a Wi-Fi direct (WFD) communication module, an ultra-wideband (UWB), an Ant+ communication module, a microwave (uWave) communication module, and the like, but is not limited thereto.

The long-distance communication module may include various types of communication modules that perform long-distance communication, and may include a mobile communication unit. The mobile communication unit transmits and receives a radio signal to and from at least one of a base station, an external terminal, and a server over a mobile communication network.

In one or more embodiments, the communication module may communicate with the external device such as a server, a user device, or another home appliance through a peripheral access point (AP). The access repeater (AP) may connect a local area network (LAN) to which the washing machine or the user device is connected to a wide area network (WAN) to which the server is connected. The washing machine or the user device may be connected to the server through the wide area network (WAN). The control unit may control various components (e.g., the driving motor and the water supply valve) of the washing machine. The control unit may control various components of the washing machine to perform at least one process including water supply, washing, rinsing, and/or dewatering according to a user input. For example, the control unit may control the driving motor to adjust a rotational speed of the drum or control the water supply valve of the water supply device to supply water to the tub.

The control unit may include hardware such as a CPU or a memory and software such as a control program. For example, the control unit may include at least one memory for storing data in the form of an algorithm or a program for controlling operations of components in the washing machine, and at least one processor for performing the above-described operations using the data stored in the at least one memory. The memory and the processor may be implemented as separate chips.

The processor may include one or more processor chips or may include one or more processing cores. The memory may include one or more memory chips or include one or more memory blocks. Also, the memory and the processor may be implemented as a single chip.

Hereinafter, a clothing treatment apparatus according to various embodiment of the disclosure will be described in detail with reference to the attached drawings.

A clothing treatment apparatus according to one or more embodiments of the disclosure may include a washing machine, a dryer-combined washing machine, a dryer, etc.

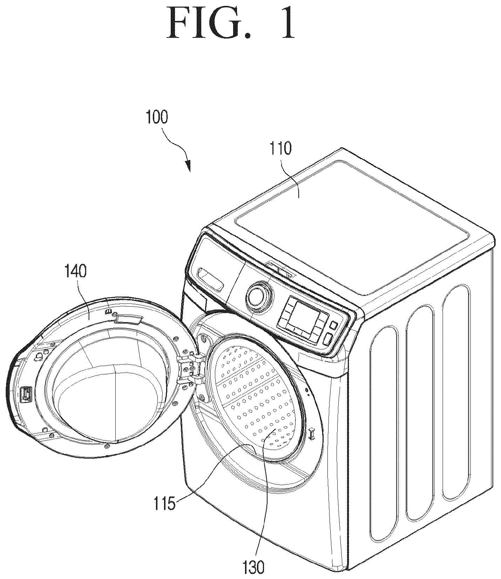

FIG. 1 is a perspective view illustrating a clothing treatment apparatus 100 according to one or more embodiment of the disclosure.

Referring to FIG. 1, a clothing treatment apparatus 100 according to an embodiment of the disclosure may include a housing 110, a tub 120, and a drum 130.

The housing 110 may be configured to accommodate various components therein.

The housing 110 may be formed in a box shape with a laundry inlet 115 formed on one side surface thereof.

A door 140 may be disposed on the front side of the housing 110. The door 140 may be disposed on the front side of the housing 110 so as to open and close the laundry inlet 115. The door 140 may be rotatably mounted on the housing 110 by a hinge.

The tub 120 may be provided inside the housing 110. The tub 120 may be configured to store water. The tub 120 may be formed in an approximately cylindrical shape and may have one end open. The open one end of the tub 120 may form a tub opening. The tub 120 may be disposed inside the housing 110 so that the tub opening corresponds to the laundry inlet 115.

The drum 130 may be disposed inside the tub 120. The drum 130 may be configured to accommodate laundry. The drum 130 may be formed in an approximately cylindrical shape and may have one end open. The open one end of the drum 130 may form a drum opening. The drum 130 may be disposed inside the tub 120 so that the drum opening corresponds to the laundry inlet 115 and the tub opening.

The laundry may be accommodated inside the drum 130 or taken out from the drum 130 through the laundry inlet 115, the tub opening, and the drum opening.

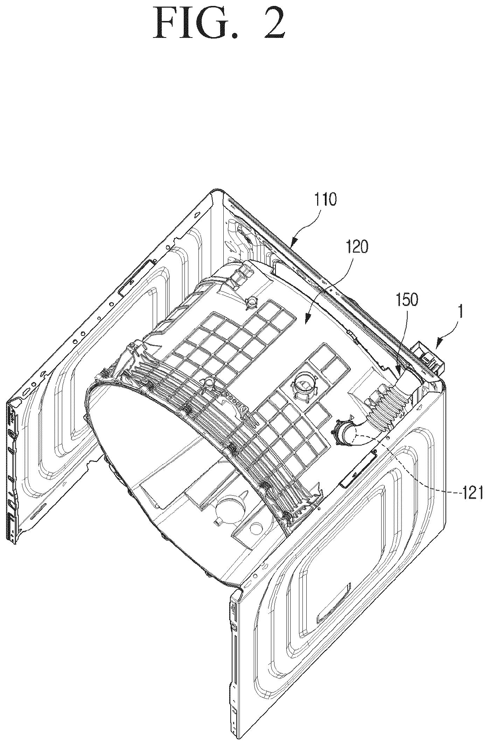

Because the housing 110, the tub 120, and the drum 130 may be the same as or similar to a clothing treatment apparatus according to the prior art, detailed descriptions thereof are omitted. Hereinafter, the parts that are different from the clothing treatment apparatus according to the prior art will be described in detail. FIG. 2 is a perspective view illustrating an air discharge pipe 150 and a filter assembly 1 of a clothing treatment apparatus 100 according to one or more embodiments of the disclosure.

Referring to FIG. 2, an air discharge pipe 150 may be disposed inside the housing 110. The air discharge pipe 150 may be disposed to connect the tub 120 and the housing 110. When processing clothing, washing foam and/or moisture vapor generated inside the tub 120 may be discharged together with air to the outside of the housing 110 through the air discharge pipe 150.

One end of the air discharge pipe 150 may be fixed to the tub 120, and the other end thereof may be fixed to the housing 110.

The air discharge pipe 150 may be formed of a flexible material. For example, the air discharge pipe 150 may be formed rubber or plastic. A corrugated pipe may be provided in the middle of the air discharge pipe 150. Therefore, the air discharge pipe 150 may be stretchable in the longitudinal direction.

The tub 120 may include an air hole 121. One end of the air discharge pipe 150 may be fixed to the air hole 121 of the tub 120. Accordingly, washing foam or moisture vapor generated inside the tub 120 may be discharged together with air through the air discharge pipe 150.

The housing 110 may include a cap hole 111. The cap hole 111 may be formed on one surface of the housing 110. For example, the cap hole 111 may be formed on the rear surface of the housing 110. The cap hole 111 may be formed on the upper portion of the rear surface of the housing 110.

A filter assembly 1 may be disposed in the cap hole 111 of the housing 110. The other end of the air discharge pipe 150 may be coupled to the filter assembly 1. In other words, the other end of the air discharge pipe 150 may be fixed to the housing 110 by the filter assembly 1.

The filter assembly 1 may be configured to filter the washing foam or moisture vapor discharged together with the air through the air discharge pipe 150 and discharge only the air.

In addition, the filter assembly 1 may be configured to guide the air discharged through the air discharge pipe 150 so that the air is discharged to the upper side of the housing 110, e.g., the upper side of the clothing treatment apparatus 100. In other words, the filter assembly 1 may be configured to block or prevent/reduce the washing foam or moisture vapor from being discharged to the outside as much as possible and guide the discharging direction of air. In other words, the air in which the washing foam or moisture vapor is filtered by the filter assembly 1 may be discharged.

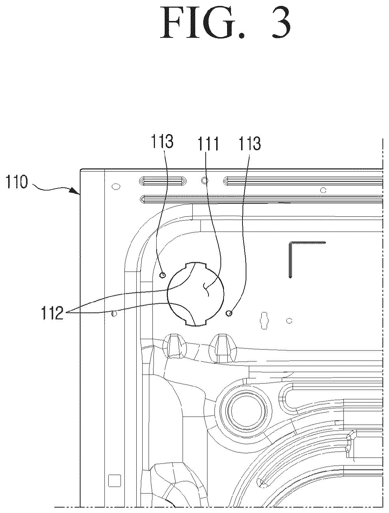

FIG. 3 is a partial perspective view illustrating a cap hole 111 provided in a housing 110 of the clothing treatment apparatus 100 of FIG. 2.

Referring to FIG. 3, the cap hole 111 may be formed in a circular shape. The cap hole 111 may include a pair of insertion grooves 112. The pair of insertion grooves 112 may be formed to be spaced apart by 180 degrees on the inner surface of the cap hole 111.

A pair of fixing grooves 113 may be formed in the housing 110 around the cap hole 111. The pair of fixing grooves 113 may be formed to be spaced apart by 180 degrees based on the center of the cap hole 111. The pair of fixing grooves 113 may be formed in a direction that does not coincide with the pair of insertion grooves 112. In other words, the pair of fixing grooves 113 may be formed to form a certain angle with the pair of insertion grooves 112 based on the center of the cap hole 111. The cap 10 of the filter assembly 1 may be fixed to the housing 110 by the pair of insertion grooves 112 of the cap hole 111 and the pair of fixing grooves 113 provided around the cap hole 111.

Hereinafter, the filter assembly 1 of a clothing treatment apparatus 100 according to one or more embodiments of the disclosure will be described in detail with reference to the attached drawings.

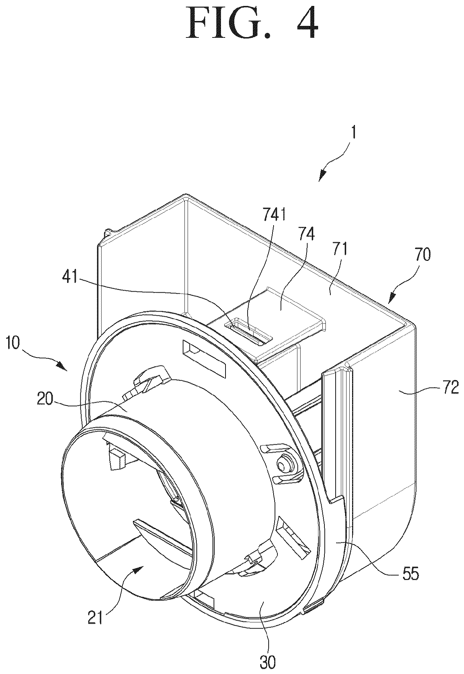

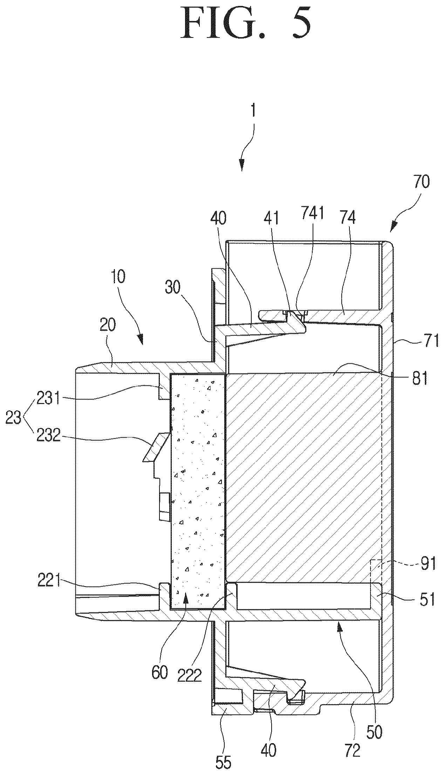

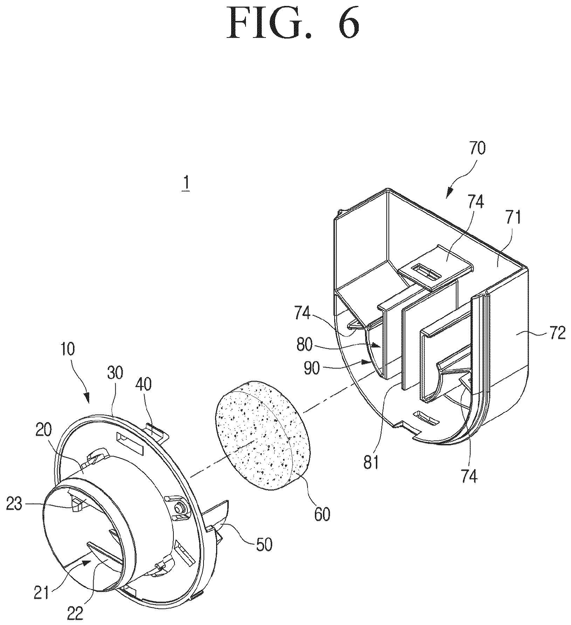

FIG. 4 is a perspective view illustrating a filter assembly 1 according to one embodiment of the disclosure. FIG. 5 is a cross-sectional view illustrating a filter assembly 1 according to one embodiment of the disclosure. FIG. 6 is an exploded perspective view illustrating a filter assembly 1 according to one embodiment of the disclosure.

Referring to FIGS. 4, 5 and 6, the filter assembly 1 according to one or more embodiments of the disclosure may include a cap 10, a filter 60, and a flow switching cover 70.

The cap 10 may be fixed to the housing 110 of the clothing treatment apparatus 100, and may be configured to be connected to one end of the air discharge pipe 150. The filter 60 may be disposed inside the cap 10. The flow switching cover 70 may be disposed on the other end of the cap 10. Accordingly, the air discharge pipe 150 may be disposed at one end of the cap 10 centered on the filter 60, and the flow switching cover 70 may be disposed at the other end of the cap 10.

The cap 10 may include a connecting pipe 20 and a flange 30.

The connecting pipe 20 may be formed to be coupled with the air discharge pipe 150. For example, the connecting pipe 20 may be formed in a hollow cylindrical shape. The connecting pipe 20 may be formed to have a size corresponding to the cap hole 111 of the housing 110. Therefore, the connecting pipe 20 may be inserted into the cap hole 111.

The air discharge pipe 150 may be coupled to one end of the connecting pipe 20. The air discharge pipe 150 may be coupled to one end of the connecting pipe 20 in various ways. For example, the air discharge pipe 150 may be fixed to one end of the connecting pipe 20 in a one-touch manner.

The flange 30 may be provided at the other end of the connecting pipe 20. The flange 30 may be formed to extend outward from the other end of the connecting pipe 20. The flange 30 may be formed along the entire circumference of the other end of the connecting pipe 20. For example, the flange 30 may be formed in a circular shape.

The flange 30 may be formed to be fixed to the housing 110. The flange 30 may be fixed to the cap hole 111 of the housing 110. The flange 30 may be fixed to the cap hole 111 of the housing 110 in various ways.

The cap 10 may include a plurality of hooks 40. The plurality of hooks 40 may be formed to be spaced apart at a certain angle on one surface of the flange 30. The plurality of hooks 40 may be formed on the flange 30 in the opposite direction to the connecting pipe 20. In other words, the connecting pipe 20 may be formed on one side of the flange 30 and the plurality of hooks 40 may be formed on the other side of the flange 30.

The filter 60 may be disposed inside the cap 10. The filter 60 may be disposed inside the connecting pipe 20 of the cap 10. The filter 60 may be configured to allow air to pass through and block foam (e.g., washing foam) and moisture vapor as much as possible. In other words, the filter 60 may be configured to filter most of the foam and moisture vapor contained in the air. Accordingly, air passing through the filter 60 may include a small amount of foam and moisture vapor that are not filtered by the filter 60.

The filter 60 may be formed of a porous material. For example, the filter 60 may be formed of polyurethane foam, sponge, etc.

The cap 10 and the flow switching cover 70 may be detachably connected to each other by the plurality of hooks 40. Then, the filter 60 may be positioned between the cap 10 and the flow switching cover 70.

The flow switching cover 70 may be detachably disposed on the cap 10. The flow switching cover 70 may be configured to switch the flow direction of air passing through the filter 60. For example, the flow switching cover 70 may be configured so that air discharged from the cap 10 flows in a direction approximately perpendicular to the central axis of the cap 10.

In this embodiment, the flow switching cover 70 may be configured to change the air flow so that the air flowing in a direction perpendicular to the rear surface of the housing 110 along the connecting pipe 20 of the cap 10 is discharged toward the upper side of the housing 110. In other words, the flow switching cover 70 may change the direction of the air flow so that the air flowing in a direction perpendicular to the rear surface of the housing 110 flows in a direction parallel to the rear surface of the housing 110.

The flow switching cover 70 may include a switching plate 71 and a side wall 72. The switching plate 71 may be formed to face the flange 30 of the cap 10. The switching plate 71 may be formed in a plate shape and may be disposed parallel to the flange 30. Therefore, the air passing through the cap 10 may collide with the switching plate 71 and change its direction of movement.

The side wall 72 may be formed perpendicular to the edge of the switching plate 71. In other words, the side wall 72 may be formed perpendicular to the switching plate 71 along the edge of the switching plate 71. The side wall 72 may not be formed on the entire circumference of the switching plate 71. In other words, the side wall 72 may not be formed on a portion of the switching plate 71. For example, the side wall 72 may be formed on the lower side and both sides of the switching plate 71, and the side wall 72 may not be formed on the upper end of the switching plate 71. Therefore, air that collides with the switching plate 71 may move toward the upper end of the switching plate 71 where the side wall 72 is not formed.

The switching plate 71 may include a plurality of hook coupling portions 74. The plurality of hook coupling portions 74 may be configured to secure the flow switching cover 70 to the cap 10.

The plurality of hook coupling portions 74 may extend in the same direction as the side wall 72 from the switching plate 71. The plurality of hook coupling portions 74 may be configured to be coupled with the plurality of hooks 40 of the cap 10. Each of the plurality of hook coupling portions 74 may include a hook hole 741. The hook hole 741 of the hook coupling portion 74 may be formed so that a hook protrusion 41 of the hook 40 of the cap 10 is inserted into the hook hole 741. The hook hole 741 of the hook coupling portion 74 may be formed in a shape corresponding to the hook protrusion 41 of the cap 10.

In the case of the filter assembly 1 according to this embodiment, the cap 10 may be provided with four hooks 40, and the flow switching cover 70 may be provided with four hook coupling portions 74.

When the hooks 40 of the cap 10 are coupled to the plurality of hook coupling portions 74 of the flow switching cover 70, the flow switching cover 70 may be fixed to the cap 10. Then, the washing foam or moisture vapor moving together with the air through the air discharge pipe 150 may be filtered by the filter 60 disposed in the cap 10, and the air may be discharged by passing through the filter 60. The air discharged from the cap 10 may collide with the switching plate 71 of the flow switching cover 70 and move toward the upper portion of the flow switching cover 70 without the side wall 72.

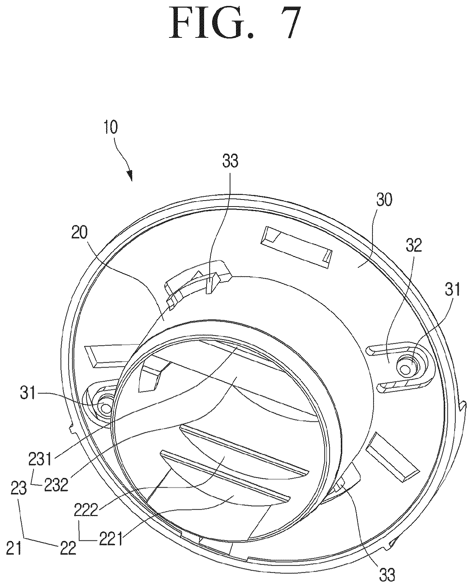

Hereinafter, a cap 10 used in a filter assembly 1 according to one or more embodiments of the disclosure may be described in detail with reference to FIGS. 7, 8, and 9.

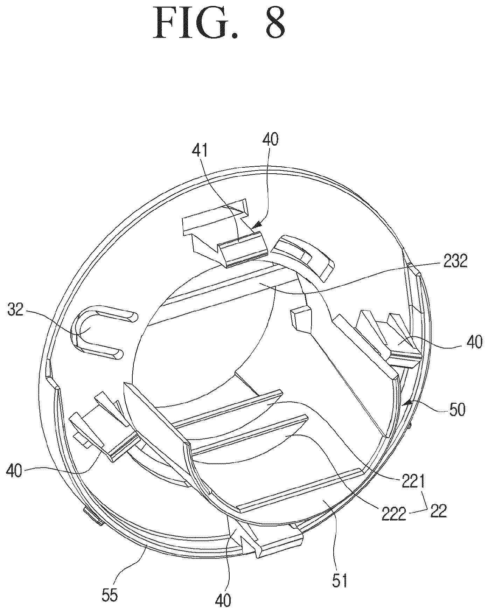

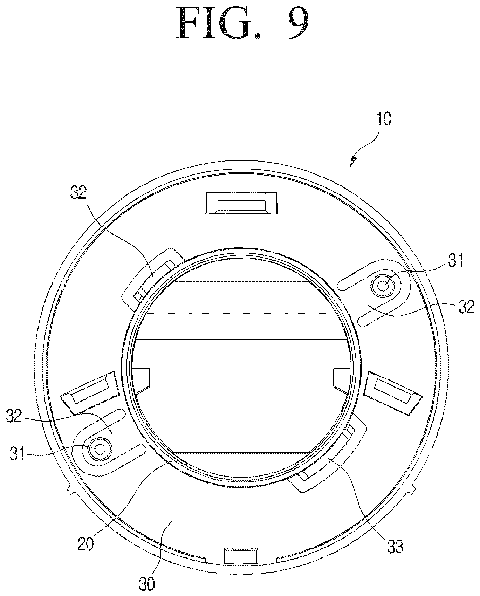

FIG. 7 is a perspective view illustrating a cap 10 of a filter assembly 1 according to one or more embodiments of the disclosure. FIG. 8 is a rear perspective view illustrating a cap 10 of a filter assembly 1 according to one or more embodiments of the disclosure. FIG. 9 is a front view illustrating a cap 10 of a filter assembly 1 according to one or more embodiments of the disclosure.

Referring to FIGS. 7, 8, and 9, the cap 10 may include a connecting pipe 20 and a flange 30.

The connecting pipe 20 may be configured to be coupled with the air discharge pipe 150. For example, the connecting pipe 20 may be formed in a hollow cylindrical shape. The connecting pipe 20 may be formed to have a size corresponding to the cap hole 111 of the housing 110. Therefore, the connecting pipe 20 may be inserted into the cap hole 111.

The flange 30 may be provided at one end of the connecting pipe 20. The flange 30 may be formed to extend outward from one end of the connecting pipe 20. The flange 30 may be formed along the entire circumference of one end of the connecting pipe 20. For example, the flange 30 may be formed in a circular shape. The flange 30 may be configured to be fixed to the housing 110. The flange 30 may include a pair of fixing protrusions 31. The pair of fixing protrusions 31 may be formed to be spaced apart from each other by 180 degrees. When the pair of fixing protrusions 31 are positioned in the pair of fixing grooves 113 provided in the housing 110, the cap 10 may be fixed to the housing 110.

Each of the pair of fixing protrusions 31 may be formed on an elastic piece 32. One end of the elastic piece 32 may be connected to the flange 30, and the other end and both sides of the elastic piece 32 may be spaced apart from the flange 30. A slit having an approximate U shape may be formed between the elastic piece 32 and the flange 30.

Therefore, the other end of the elastic piece 32 may be elastically deformed relative to the flange 30. The fixing protrusion 31 may be formed on the other end of the elastic piece 32. Therefore, the fixing protrusions 31 may be moved approximately vertically relative to the flange 30.

A pair of insertion protrusions 33 may be provided on the outer circumferential surface of the connecting pipe 20 adjacent to the flange 30. The pair of insertion protrusions 33 may be formed in a shape corresponding to the pair of insertion grooves 112 of the housing 110. Accordingly, the pair of insertion protrusions 33 of the cap 10 may be inserted into the pair of insertion grooves 112 of the housing 110. The pair of insertion protrusions 33 may be formed at a certain distance from the flange 30. The gap between the pair of insertion protrusions 33 and the flange 30 may be formed to correspond to the thickness of the portion of the housing 110 where the cap hole 111 is formed.

Therefore, when the pair of insertion protrusions 33 of the cap 10 are inserted into the pair of insertion grooves 112 of the housing 110 and rotated at a certain angle, the housing 110 is positioned between the flange 30 and the pair of insertion protrusions 33, so that the cap 10 is not separated from the housing 110.

When the cap 10 is rotated at a certain angle and the fixing protrusions 31 of the flange 30 are positioned in the pair of fixing grooves 113 of the housing 110, the cap 10 may be fixed to the housing 110 and may not rotate.

The cap 10 may include a plurality of hooks 40. The plurality of hooks 40 may be formed to be spaced apart at a certain angle on one surface of the flange 30. The plurality of hooks 40 may be formed on the flange 30 in the opposite direction to the connecting pipe 20. In other words, the connecting pipe 20 may be formed on one side of the flange 30 and the plurality of hooks 40 may be formed on the other side of the flange 30.

Each of the plurality of hooks 40 may include a hook protrusion 41 formed on the leading end of the hook 40.

The cap 10 according to this embodiment may include four hooks 40. The four hooks 40 may be disposed at approximately 90 degrees apart in the circumferential direction. However, the number of the plurality of hooks 40 is not limited thereto. The plurality of hooks 40 may be formed two or three.

The cap 10 may include a cap fixing part 21 configured to fix the filter 60. The cap fixing part 21 may be provided on the inner surface of the connecting pipe 20.

The cap fixing part 21 may include a lower cap fixing part 22 and an upper cap fixing part 23.

The lower cap fixing part 22 may be formed to fix the lower portion of the filter 60. The lower cap fixing part 22 may be formed to prevent/reduce water from flowing out toward the flow switching cover 70.

The lower cap fixing part 22 may include two fixing ribs 221 and 222. The two fixing ribs 221 and 222 may be formed on the inner surface of the connecting pipe 20 at a certain interval in the longitudinal direction. The two fixing ribs 221 and 222 may be spaced apart at an interval corresponding to the thickness of the filter 60. Therefore, by positioning the filter 60 between the two fixing ribs 221 and 222, the filter 60 may be secured inside the cap 10.

The height of each of the two fixing ribs 221 and 222 may be formed as low as possible so as not to obstruct the air flow passing through the filter 60. In addition, the two fixing ribs 221 and 222 may be formed to have a height that prevents the filter 60 from being moved by the air flow passing through the filter 60.

The upper cap fixing part 23 may be configured to block the discharge of moisture vapor as much as possible. The upper cap fixing part 23 may be formed so that the moisture vapor collides and is condensed. The upper cap fixing part 23 may be formed to fix the upper portion of the filter 60. The upper cap fixing part 23 may be positioned above the lower cap fixing part 22.

The upper cap fixing part 23 may include an upper fixing rib 231 formed on the inner surface of the connecting pipe 20. The upper fixing rib 231 may be formed to be positioned on the same plane as one of the two fixing ribs 221 and 222 of the lower cap fixing part 22. For example, as illustrated in FIG. 5, the upper fixing rib 231 may be formed on the same plane as the fixing rib 221 that is closer to the leading end of the connecting pipe 20 among the two fixing ribs.

The upper fixing rib 231 may support the upper portion of the filter 60 disposed at the lower cap fixing part 22 of the connecting pipe 20 of the cap 10.

The upper cap fixing part 23 may include a sub-fixing rib 232. The sub-fixing rib 232 may be disposed below the upper fixing rib 231 and parallel to the upper fixing rib 231. The sub-fixing rib 232 may be spaced apart from the upper fixing rib 231 in the vertical direction by a certain distance.

The sub-fixing rib 232 may increase the effect of moisture vapor colliding and condensing. In addition, the sub-fixing rib 232 may increase the force that fixes the filter 60.

Air containing washing foam or moisture vapor may pass between the sub-fixing rib 232 and the upper fixing rib 231.

As illustrated in FIG. 5, the sub-fixing rib 232 may be formed to be inclined with respect to the virtual plane on which the upper fixing rib 231 and the fixing rib 221 are provided. When the sub-fixing rib 232 is disposed to be inclined, the air flow resistance caused by the sub-fixing rib 232 may be reduced.

The cap 10 may include an inner leak-blocking portion 50. The inner leak-blocking portion 50 may extend from the flange 30 in the opposite direction to the connecting pipe 20. In other words, the inner leak-blocking portion 50 may extend in the same direction as the plurality of hooks 40.

The inner leak-blocking portion 50 may be formed as a curved surface. The inner leak-blocking portion 50 may be formed as a curved surface having a roughly hollow half-cylinder shape. Therefore, the upper side of the inner leak-blocking portion 50 may be open.

The inner leak-blocking portion 50 may be formed by extending from the connecting pipe 20. In other words, the inner surface of the inner leak-blocking portion 50 and the inner surface of the connecting pipe 20 may be formed as a curved surface having the same diameter.

A leak-blocking bump 51 may be provided at the leading end of the inner leak-blocking portion 50. The leak-blocking bump 51 may be formed to prevent/reduce moisture or water collected in the inner leak-blocking portion 50 from leaking out to the outside of the inner leak-blocking portion 50.

The leak-blocking bump 51 may be formed parallel to the two fixing ribs 221 and 222 formed on the connecting pipe 20.

The cap 10 may include an outer leak-blocking portion 55. The outer leak-blocking portion 55 may be formed to extend in the same direction as the inner leak-blocking portion 50 from the outer circumferential surface of the flange 30.

The outer leak-blocking portion 55 may be formed as a curved surface. The outer leak-blocking portion 55 may be formed as a curved surface having a substantially hollow half-cylinder shape. Accordingly, the upper side of the outer leak-blocking portion 55 may be open.

The outer leak-blocking portion 55 and the inner leak-blocking portion 50 may be formed concentrically. The outer leak-blocking portion 55 may be formed on the outer side of the inner leak-blocking portion 50. In the longitudinal direction of the cap 10, the outer leak-blocking portion 55 may be formed to have a shorter length than the inner leak-blocking portion 50.

Some hooks 40 among the plurality of hooks 40 may be located between the outer leak-blocking portion 55 and the inner leak-blocking portion 50.

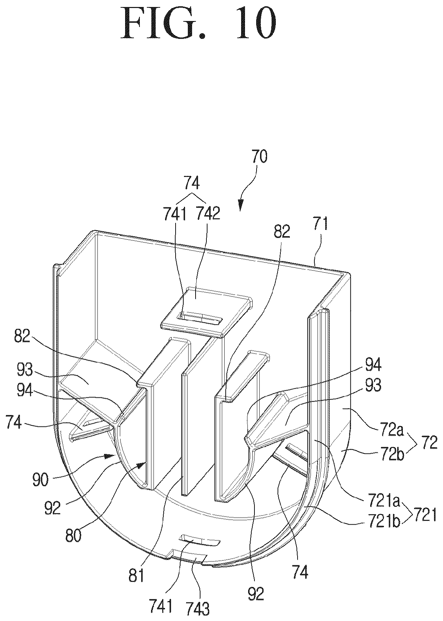

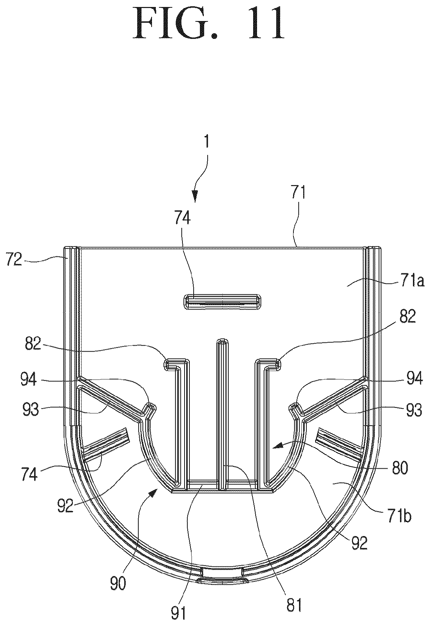

Hereinafter, a flow switching cover 70 used in a filter assembly 1 according to one or more embodiments of the disclosure will be described in detail with reference to FIGS. 10 and 11.

FIG. 10 is a perspective view illustrating a flow switching cover 70 of a filter assembly 1 according to one or more embodiments of the disclosure. FIG. 11 is a front view illustrating a flow switching cover 70 of a filter assembly 1 according to one or more embodiments of the disclosure.

The flow switching cover 70 may be formed to guide the air flow so that the direction of the air flow passing through the cap 10 is diverted to a direction approximately perpendicular to the cap 10.

Referring to FIGS. 10 and 11, the flow switching cover 70 may include a switching plate 71 and a side wall 72.

The switching plate 71 may be formed to face the flange 30 of the cap 10. The switching plate 71 may be formed in a plate shape. The air passing through the cap 10 may collide with the switching plate 71 and change its direction of movement. The switching plate 71 may include an upper switching plate 71a having a substantially rectangular shape and a lower switching plate 71b having a semicircular shape. The lower switching plate 71b may be formed to have a radius corresponding to the radius of the flange 30 of the cap 10.

The side wall 72 may be formed perpendicular to the edge of the switching plate 71. In other words, the side wall 72 may be formed perpendicular to the switching plate 71 along the edge of the switching plate 71. The side wall 72 may not be formed on the entire circumference of the switching plate 71. In other words, the side wall 72 may not be formed on a portion of the switching plate 71.

For example, the side wall 72 may be formed on the lower side and both sides of the switching plate 71, and the side wall 72 may not be formed on the upper side of the switching plate 71. In detail, the side wall 72 may be formed on the edge of the lower switching plate 71b and both sides of the upper switching plate 71a. The side wall 72 may not be provided on the upper side of the upper switching plate 71a. In other words, the upper side of the flow switching cover 70 is open.

Therefore, the air that collides with the switching plate 71 may move toward the upper side of the switching plate 71 where the side wall 72 is not formed.

The leading end 721 of the side wall 72 may be formed to be inserted into the outer leak-blocking portion 55 of the cap 10.

For example, the lower side wall 72b, e.g., the side wall 72b formed at the edge of the lower switching plate 71b, may be formed as a curved surface corresponding to the curved surface of the outer leak-blocking portion 55 of the cap 10. The diameter of the outer surface of the leading end 721b of the lower side wall 72b and the diameter of the inner surface of the outer leak-blocking portion 55 of the cap 10 may be determined so that the leading end 721b of the lower side wall 72b may be fitted into the outer leak-blocking portion 55.

In addition, the upper side wall 72a extending from both ends of lower side wall 72b, e.g., a lower portion of the leading end 721a of the side wall 72a formed at both edges of the upper switching plate 71a, may be inserted into both ends of the outer leak-blocking portion 55 of the cap 10.

When the leading end 721 of the side wall 72 of the flow switching cover 70 is fitted into the outer leak-blocking portion 55 of the cap 10, moisture generated when the air discharged from the cap 10 collides with the flow switching cover 70 may be prevented/blocked from leaking to the outside of the flow switching cover 70. Therefore, the side wall 72 of the flow switching cover 70 may function as a leakage blocking part.

The switching plate 71 may include a plurality of hook coupling portions 74. The plurality of hook coupling portions 74 may be configured to secure the flow switching cover 70 to the cap 10.

The plurality of hook coupling portions 74 may be disposed in the same direction as the side wall 72 from the switching plate 71. The plurality of hook coupling portions 74 may be configured to be coupled with the plurality of hooks 40 of the cap 10. Each of the plurality of hook coupling portions 74 may include a hook hole 741. The hook hole 741 of the hook coupling portion 74 may be formed so that a hook protrusion 41 of the hook 40 of the cap 10 is inserted into the hook hole 741. In other words, the hook hole 741 of the hook coupling portion 74 may be formed in a shape corresponding to the hook protrusion 41 of the cap 10.

Therefore, when the hook protrusions 41 of the plurality of hooks 40 of the cap 10 are inserted into the hook holes 741 of the plurality of hook coupling portions 74 of the flow switching cover 70, the flow switching cover 70 may be coupled with the cap 10.

The plurality of hook coupling portions 74 may be formed to correspond to the plurality of hooks 40 of the cap 10. Therefore, in the case of the flow switching cover 70 according to this embodiment, four hook coupling portions 74 may be provided corresponding to the four hooks 40 provided on the cap 10.

Referring to FIG. 10, each of the three hook coupling portions 74 may include a hook bracket 742 disposed vertically on one surface of the switching plate 71. The hook hole 741 may be formed at the leading portion of the hook bracket 742. The hook protrusion 41 of the hook 40 may be coupled to the hook hole 741 of the hook bracket 742.

One hook coupling portion 74 may be formed by the side wall 72. The hook hole 741 may be formed at the lower end of the side wall 72, into which the hook protrusion 41 of the hook 40 engages. A hook groove 743 may be provided at the edge of the side wall 72 in front of the hook hole 741. The hook 40 of the cap 10 may be inserted into the hook groove 743.

The flow switching cover 70 may include a cover support portion 80. The cover support portion 80 may be formed to support the filter 60. The cover support portion 80 may be formed to support the filter 60 while allowing air passing through the filter 60 to pass therethrough. Then, the filter 60 may be positioned between the cap fixing part 21 of the cap 10 and the cover support portion 80 of the flow switching cover 70.

The cover support portion 80 may be formed on the switching plate 71. The cover support portion 80 may be formed in the same direction as the side wall 72 on one surface of the switching plate 71.

For example, the cover support portion 80 may include a plurality of support plates 81. The plurality of support plates 81 may be disposed perpendicular to the switching plate 71. The plurality of support plates 81 may be disposed parallel to each other at regular intervals on the switching plate 71. Air passing through the filter 60 may travel through spaces between the plurality of support plates 81. In other words, the plurality of support plates 81 may guide the air flow.

In this embodiment, the cover support portion 80 may include three support plates 81. Therefore, the air passing through the filter 60 may flow through two spaces between the three support plates 81.

The two outermost support plates 81 among the plurality of support plates 81 may include a bending portion 82. The bending portion 82 may be provided at the upper end of the support plate 81. The bending portion 82 may be disposed at a certain angle with respect to the support plate 81 toward the outside of the support plate 81 on the upper end of the support plate 81. For example, the bending portion 82 may be disposed at approximately a right angle with respect to the support plate 81. The bending portion 82 may be formed by bending the upper portion of the support plate 81 outward at a certain angle. For example. The bending portion 82 may be formed by bending the upper portion of the support plate 81 outward at approximately 90 degrees.

By forming the bending portions 82 on the two outermost support plates 81 of the plurality of support plates 81, the filter 60 may be firmly and stably supported. In other words, the bending portions 82 may prevent/block the upper portion of the filter 60 from being pushed out as much as possible due to pressure acting on the inside of the tub 120. In addition, the bending portion 82 may not impede the flow of air passing through the cover support portion 80.

The cover support portion 80 may not include the bending portions 82. In this case, the ability of the cover support portion 80 to support the filter 60 may be weaker than when the cover support portion 80 includes the bending portions 82.

The flow switching cover 70 may include a cover leak blocking portion 90. The cover leak blocking portion 90 may be configured to prevent/block water inside the flow switching cover 70 from flowing downward. The cover leak blocking portion 90 may be provided on the lower side of the cover support portion 80.

The cover leak blocking portion 90 may include a support bump 91. The support bump 91 may be provided at the lower end of the cover support portion 80. The support bump 91 may be formed to protrude from one surface of the switching plate 71 at the lower end of the cover support portion 80. The support bump 91 may be formed to protrude into the space between the plurality of support plates 81. The support bump 91 may be formed to have a minimum height so as not to obstruct the air flow passing through the space between the plurality of support plates 81.

The support bump 91 may be formed to correspond to the leak-blocking bump 51 of the cap 10. The support bump 91 may be formed so that, when the cap 10 and the flow switching cover 70 are coupled to each other, the lower end of the support bump 91 of the flow switching cover 70 contacts the upper end of the leak-blocking bump 51 of the cap 10. When the lower end of the support bump 91 and the upper end of the leak-blocking bump 51 contact each other, water collected in the inner leak-blocking portion 50 of the cap 10 may be prevented or blocked from flowing out to the flow switching cover 70.

The cover leak blocking portion 90 may include a pair of curved plates 92. The pair of curved plates 92 may be formed in an arc shape extending upward from the lower ends of the two outermost support plates 81 among the plurality of support plates 81.

The pair of curved plates 92 may be formed with a curvature corresponding to the diameter of the filter 60. In other words, the pair of curved plates 92 may be formed to have a curvature radius smaller than the diameter of the filter 60. In this case, the pair of curved plates 92 may function as a cover support that supports the filter 60. The cover leak blocking portion 90 may include a pair of inclined plates 93. The pair of inclined plates 93 may be disposed to be connected to the pair of curved plates 92, respectively. That is, one end of each of the pair of inclined plates 93 may be connected to the side wall 72 of the flow switching cover 70, and the other end thereof may be connected to one end of each of the pair of curved plates 92. In other words, one end of the curved plate 92 may be connected to the lower end of the support plate 81, and the other end thereof may be connected to the inclined plate 93. The pair of inclined plates 93 may be disposed to be inclined downward from the side wall 72 to the pair of curved plates 92.

As described above, when the pair of inclined plates 93 are disposed between the pair of curved plates 92 and both side walls 72 of the flow switching cover 70, water inside the flow switching cover 70 may flow downward along the inclined plates 93 and be accommodated in the concave spaces formed by the curved plates 92 and the support plates 81. Therefore, most of the water existing in the upper portion of the internal space of the flow switching cover 70 may not move to the lower side wall 72 of the flow switching cover 70.

In addition, because the inner leak-blocking portion 50 of the cap 10 is positioned below the pair of curved plates 92, when water leaks from the pair of curved plates 92, the water may be blocked by the inner leak-blocking portion 50 of the cap 10. In addition, because the outer leak-blocking portion 55 of the cap 10 and the side wall 72 of the flow switching cover 70 are coupled to each other below the inner leak-blocking portion 50 of the cap 10, when water leaks from the inner leak-blocking portion 50 of the cap 10, the water may not leak to the outside of the flow switching cover 70.

The cover leak blocking portion 90 may include a pair of support protrusions 94. The support protrusions 94 may be formed to support the filter 60. The pair of support protrusions 94 may be formed at points where the pair of curved plates 92 and the pair of inclined plates 93 are connected. The pair of support protrusions 94 may protrude toward the upper end of the support plate 81. The pair of support protrusions 94 may maximally prevent the upper portion of the filter 60 from being pushed out due to pressure acting inside the tub 120.

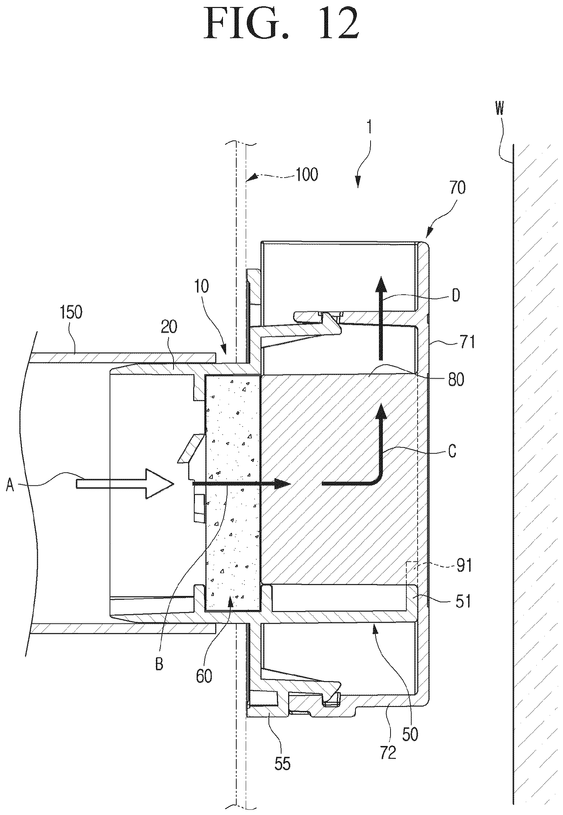

Hereinafter, the operation of the filter assembly 1 according to one or more embodiments of the disclosure will be described in detail with reference to FIG. 12.

FIG. 12 is a cross-sectional view for explaining an operation of a filter assembly 1 according to one or more embodiments of the disclosure.

Washing foam and/or moisture vapor generated inside the tub 120 may be introduced into the air discharge pipe 150 together with air.

Air containing washing foam and/or moisture vapor flowing into the air discharge pipe 150 may enter the filter assembly 1 coupled to one end of the air discharge pipe 150 (arrow A).

When the air containing washing foam and/or moisture vapor flows into the connecting pipe 20 of the filter assembly 1, the washing foam and/or moisture vapor may be filtered by the filter 60 and air may pass through the filter 60 (arrow B).

The air passing through the filter 60 may collide with the flow switching cover 70 and move upward (arrow C). In other words, the flow direction of the air may be changed by approximately 90 degrees by the flow switching cover 70.

In detail, the air passing through the filter 60 may pass through the spaces between the plurality of support plates 81 of the flow switching cover 70 and collide with the switching plate 71. Because the lower ends of the plurality of support plates 81 are blocked by the inner leak-blocking portion 50 of the cap 10, the air that collides with the switching plate 71 may move upward along the plurality of support plates 81.

Because the upper side of the flow switching cover 70 is open, the air that collides with the flow switching cover 70 may be discharged upward through the upper side of the flow switching cover 70 (arrow D).

Meanwhile, when the air passing through the filter 60 collides with the switching plate 71, fine moisture that passed through the filter 60 along with the air condenses, causing moisture to form on the switching plate 71. The moisture formed on the switching plate 71 may flow downward and be received in the cover leak blocking portion 90. Furthermore, the moisture formed on the switching plate 71 between the plurality of support plates 81 may be received in the inner leak-blocking portion 50 of the cap 10.

Because the outer side of the inner leak-blocking portion 50 of the cap 10 is surrounded by the outer leak-blocking portion 55 and the side wall 72 of the flow switching cover 70, water flowing out from the inner leak-blocking portion 50 may be blocked by the outer leak-blocking portion 55 and the side wall 72 of the flow switching cover 70.

In general, the clothing treatment apparatus 100 may be disposed with its rear side adjacent to a wall W. Therefore, when using a filter assembly 1 without the flow switching cover 70 disposed on the front side of the cap 10, air passing through the filter 60 may collide with the adjacent wall W.

When the air passing through the filter 60 collides with the wall W, moisture may form on the wall W. When moisture forms on the wall W, mold may form on the wall W.

However, because the clothing treatment apparatus 100 according to one embodiment of the disclosure uses the filter assembly 1 including the flow switching cover 70 disposed on the front side of the cap 10, air discharged from the clothing treatment apparatus 100 may be discharged to the upper side of the clothing treatment apparatus 100 by the flow switching cover 70, and thus moisture may not form on the wall W. Therefore, by using the filter assembly 1 according to an embodiment of the disclosure, mold growth on the wall W adjacent to the rear side of the clothing treatment apparatus 100 may be prevented/blocked or minimized/reduced.

In general, the clothing treatment apparatus 100, for example, a washing machine, may be disposed close to the wall W with the rear side of the washing machine facing the wall W. In this case, when the moisture vapor generated in the tub of the washing machine 100 is discharged directly from the rear side of the washing machine 100, the moisture vapor may collide with the wall W. When the moisture vapor collides with the wall W, mold may form on the wall W. However, because the clothing treatment apparatus 100 according to an embodiment of the disclosure uses the filter assembly 1 having the flow switching cover 70, it is possible to prevent the moisture vapor discharged from the clothing treatment apparatus 100 from colliding with the wall W. Accordingly, mold may be prevented or reduced from forming on the wall W due to the moisture vapor.

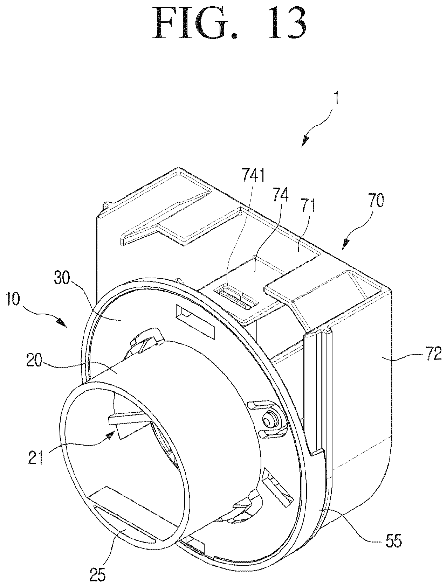

Hereinafter, a filter assembly 1 according to one or more embodiments of the disclosure will be described in detail with reference to FIGS. 13 to 18.

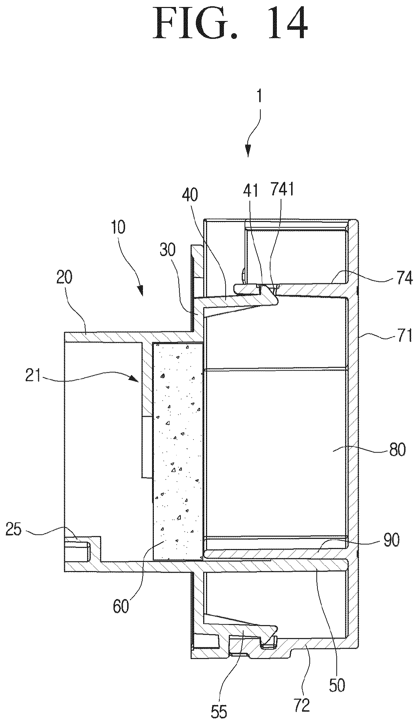

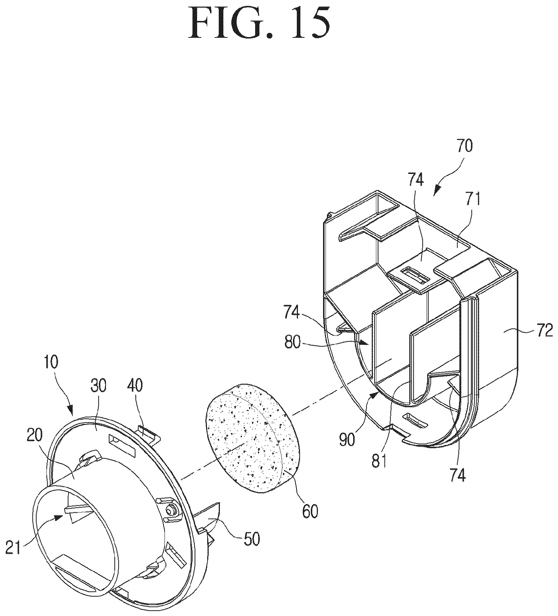

FIG. 13 is a perspective view illustrating a filter assembly 1 according to one or more embodiments of the disclosure. FIG. 14 is a cross-sectional view illustrating a filter assembly 1 according to one or more embodiments of the disclosure. FIG. 15 is an exploded perspective view illustrating a filter assembly 1 according to one or more embodiments of the disclosure.

Referring to FIGS. 13, 14, and 15, a filter assembly 1 according to one or more embodiments of the disclosure may include a cap 10, a filter 60, and a flow switching cover 70.

The cap 10 may be fixed to the housing 110 of the clothing treatment apparatus 100, and may be formed to be connected to one end of the air discharge pipe 150.

The filter 60 may be disposed inside the cap 10. The flow switching cover 70 may be disposed at the other end of the cap 10. Accordingly, the air discharge pipe 150 may be disposed at one end of the cap 10 centered on the filter 60, and the flow switching cover 70 may be disposed at the other end of the cap 10.

The cap 10 may include a connecting pipe 20 and a flange 30.

The connecting pipe 20 may be formed to be coupled with the air discharge pipe 150 (see Fig. 2). For example, the connecting pipe 20 may be formed in a hollow cylindrical shape. The connecting pipe 20 may be formed to have a size corresponding to the cap hole 111 of the housing 110 (see FIG. 3). Therefore, the connecting pipe 20 may be inserted into the cap hole 111.

The flange 30 may be provided at one end of the connecting pipe 20. The flange 30 may be formed to extend outward from one end of the connecting pipe 20. The flange 30 may be formed along the entire circumference of one end of the connecting pipe 20. For example, the flange 30 may be formed in a circular shape. The flange 30 may be formed to be fixed to the housing 110. The flange 30 may be fixed to the cap hole 111 of the housing 110.

The cap 10 may include a plurality of hooks 40. The plurality of hooks 40 may be formed to be spaced apart at a certain angle on one surface of the flange 30. The plurality of hooks 40 may be formed on the flange 30 in the opposite direction to the connecting pipe 20. In other words, the connecting pipe 20 may be formed on one side of the flange 30 and the plurality of hooks 40 may be formed on the other side of the flange 30.

The filter 60 may be disposed inside the cap 10. The filter 60 may be disposed inside the connecting pipe 20 of the cap 10. The filter 60 may be configured to allow air to pass through while blocking washing foam and moisture vapor as much as possible.

The filter 60 may be formed of a porous material. For example, the filter 60 may be formed of polyurethane foam, sponge, or the like.

The cap 10 and the flow switching cover 70 may be detachably connected to each other by the plurality of hooks 40. Then, the filter 60 may be positioned between the cap 10 and the flow switching cover 70.

The flow switching cover 70 may be detachably disposed on the cap 10. The flow switching cover 70 may be configured to switch the flow direction of air passing through the filter 60. For example, the flow switching cover 70 may be configured so that air discharged from the cap 10 flows in a direction approximately perpendicular to the central axis of the cap 10.

In this embodiment, the flow switching cover 70 may be configured to change the air flow so that the air flowing in a direction perpendicular to the rear surface of the housing 110 along the connecting pipe 20 of the cap 10 is discharged toward the upper side of the housing 110. In other words, the flow switching cover 70 may change the direction of the air flow so that the air flowing in a direction perpendicular to the rear surface of the housing 110 flows in a direction parallel to the rear surface of the housing 110.

The flow switching cover 70 may include a switching plate 71 and a side wall 72. The switching plate 71 may be formed to face the flange 30 of the cap 10. The switching plate 71 may be formed in a plate shape and may be disposed parallel to the flange 30. Therefore, the air passing through the cap 10 may collide with the switching plate 71 and change its direction of movement.

The side wall 72 may be formed perpendicular to the edge of the switching plate 71. In other words, the side wall 72 may be formed perpendicular to the switching plate 71 along the edge of the switching plate 71. The side wall 72 may not be formed on the entire circumference of the switching plate 71. In other words, the side wall 72 may not be formed on a portion of the switching plate 71. For example, the side wall 72 may be formed on the lower side and both sides of the switching plate 71, and the side wall 72 may not be formed on the upper side of the switching plate 71. Therefore, air that collides with the switching plate 71 may move toward the upper side of the switching plate 71 where the side wall 72 is not formed.

The switching plate 71 may include a plurality of hook coupling portions 74. The plurality of hook coupling portions 74 may be configured to secure the flow switching cover 70 to the cap 10.

The plurality of hook coupling portions 74 may extend from the switching plate 71 in the same direction as the side wall 72. The plurality of hook coupling portions 74 may be configured to be coupled with the plurality of hooks 40 of the cap 10. Each of the plurality of hook coupling portions 74 may include a hook hole 741. The hook hole 741 of the hook coupling portion 74 may be formed so that a hook protrusion 41 of the hook 40 of the cap 10 is inserted into the hook hole 741. The hook hole 741 of the hook coupling portion 74 may be formed in a shape corresponding to the hook protrusion 41 of the cap 10.

In the case of the filter assembly 1 according to this embodiment, the cap 10 may be provided with four hooks 40, and the flow switching cover 70 may be provided with four hook coupling portions 74.

When the plurality of hooks 40 of the cap 10 are coupled to the plurality of hook coupling portions 74 of the flow switching cover 70, the flow switching cover 70 may be fixed to the cap 10. Then, the washing foam or moisture vapor discharged together with air through the air discharge pipe 150 may be filtered by the filter 60 disposed in the cap 10, and the air may be discharged by passing through the filter 60. The air discharged from the cap 10 may collide with the switching plate 71 of the flow switching cover 70 and move toward the upper side of the flow switching cover 70 without the side wall 72.

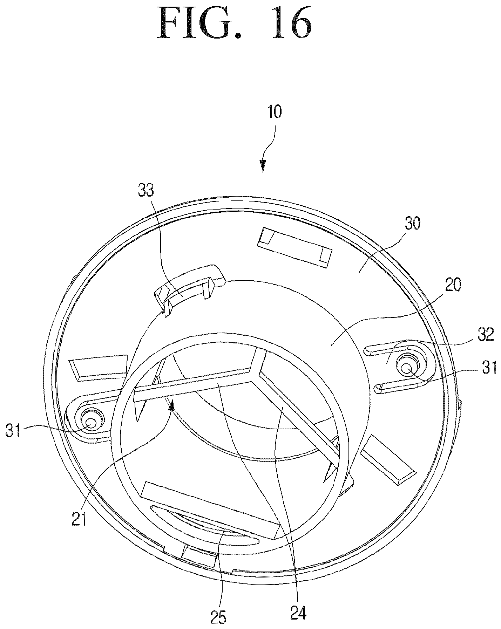

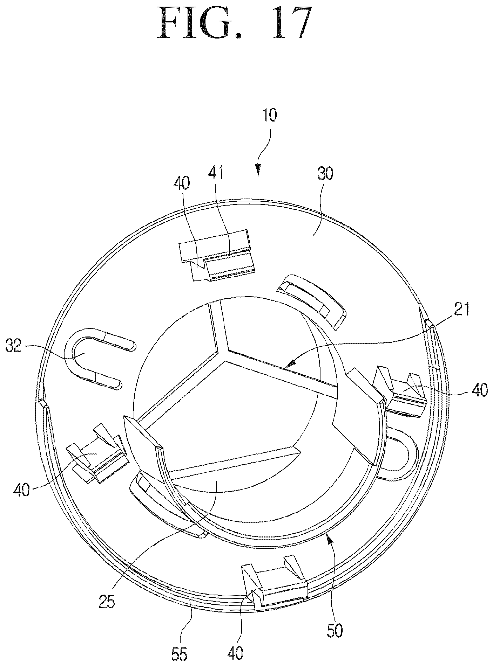

Hereinafter, a cap 10 used in a filter assembly 1 according to one or more embodiments of the disclosure will be described in detail with reference to FIGS. 16 and 17.

FIG. 16 is a perspective view illustrating a cap 10 of a filter assembly 1 according to one or more embodiments of the disclosure. FIG. 17 is a rear perspective view illustrating a cap 10 of a filter assembly 1 according to one or more embodiments of the disclosure.

Referring to FIGS. 16 and 17, a cap 10 may include a connecting pipe 20 and a flange 30.

The connecting pipe 20 may be formed to be coupled with the air discharge pipe 150. For example, the connecting pipe 20 may be formed in a hollow cylindrical shape. The connecting pipe 20 may be formed to have a size corresponding to the cap hole 111 of the housing 110 (see FIG. 3). Therefore, the connecting pipe 20 may be inserted into the cap hole 111.

The flange 30 may be provided at one end of the connecting pipe 20. The flange 30 may be formed to extend outward from one end of the connecting pipe 20. The flange 30 may be formed along the entire circumference of one end of the connecting pipe 20. For example, the flange 30 may be formed in a circular shape. The flange 30 may be formed to be fixed to the housing 110. The flange 30 may include a pair of fixing protrusions 31. The pair of fixing protrusions 31 may be formed to be spaced apart from each other by 180 degrees. When the pair of fixing protrusions 31 are positioned in the pair of fixing grooves 113 provided in the housing 110, the cap 10 may be fixed to the housing 110.

The pair of fixing protrusions 31 may be identical or similar to the pair of fixing protrusions 31 of the cap 10 of the filter assembly 1 according to the above-described embodiment, and thus a detailed description thereof is omitted.

To secure the cap 10 to the housing 110, the cap 10 may include a pair of insertion protrusions 33. The pair of insertion protrusions 33 may be identical or similar to the pair of insertion protrusions 33 of the cap 10 of the filter assembly 1 according to the above-described embodiment, and thus a detailed description thereof is omitted.

The cap 10 may be secured to the cap hole 111 of the housing 110 by the pair of fixing protrusions 31 and the pair of insertion protrusions 33.

The cap 10 may include a plurality of hooks 40. The plurality of hooks 40 may be identical or similar to the plurality of hooks 40 of the filter assembly 1 according to the above-described embodiment, and thus a detailed description thereof is omitted. The cap 10 may include a cap fixing part 21 configured to fix the filter 60. The cap fixing part 21 may be provided on the inner surface of the connecting pipe 20. The cap fixing part 21 may be formed in an approximately Y shape. The cap fixing part 21 may be formed as three bars 24. One end of each of the three bars 24 may be connected to the inner surface of the connecting pipe 20, and the other ends of the three bars 24 may be coupled to each other and positioned within the connecting pipe 20. The three bars 24 may be arranged on the same plane. The three bars 24 may be formed in the shape of narrow, long bars.

A water barrier 25 may be provided at the leading end of the inner surface of the connecting pipe 20. The water barrier 25 may be formed to block water flowing along the air discharge pipe 150 (see FIG. 2) from flowing into the interior of the connecting pipe 20.

The cap 10 may include an inner leak-blocking portion 50. The inner leak-blocking portion 50 may extend from the flange 30 in the opposite direction to the connecting pipe 20. In other words, the inner leak-blocking portion 50 may extend in the same direction as the plurality of hooks 40.

The inner leak-blocking portion 50 may be formed as a curved surface. The inner leak-blocking portion 50 may be formed as a curved surface having a roughly hollow half-cylinder shape. Therefore, the upper side of the inner leak-blocking portion 50 may be open.

The inner leak-blocking portion 50 may be formed by extending from the connecting pipe 20. In other words, the inner surface of the inner leak-blocking portion 50 and the inner surface of the connecting pipe 20 may be formed as a curved surface having the same diameter.

The cap 10 may include an outer leak-blocking portion 55. The outer leak-blocking portion 55 may be formed to extend in the same direction as the inner leak-blocking portion 50 from the outer circumferential surface of the flange 30.

The outer leak-blocking portion 55 may be formed as a curved surface. The outer leak-blocking portion 55 may be formed as a curved surface having a substantially hollow half-cylinder shape. Accordingly, the upper side of the outer leak-blocking portion 55 may be open.

The outer leak-blocking portion 55 and the inner leak-blocking portion 50 may be formed concentrically. The outer leak-blocking portion 55 may be formed on the outer side of the inner leak-blocking portion 50. The outer leak-blocking portion 55 may be formed to have a shorter length than the inner leak-blocking portion 50. Some of the plurality of hooks 40 may be positioned between the outer leak-blocking portion 55 and the inner leak-blocking portion 50.

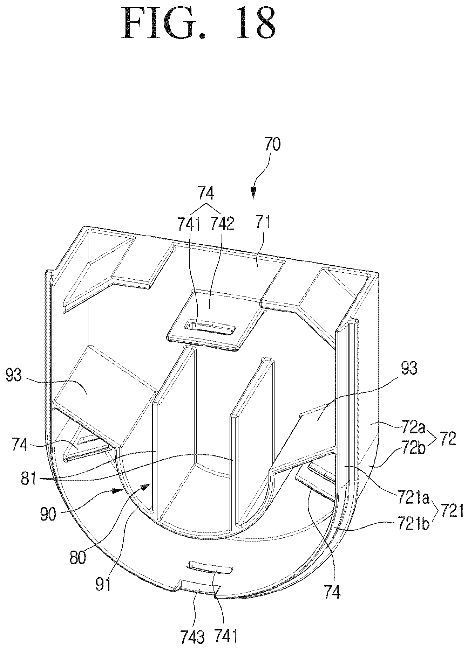

Hereinafter, a flow switching cover 70 used in a filter assembly 1 according to one or more embodiments of the disclosure will be described in detail with reference to FIG. 18.

FIG. 18 is a perspective view illustrating a flow switching cover 70 of a filter assembly 1 according to one or more embodiments of the disclosure.

Referring to FIG. 18, a flow switching cover 70 may include a switching plate 71 and a side wall 72.

The switching plate 71 may be formed to face the flange 30 of the cap 10. The switching plate 71 may be formed in a plate shape. The air passing through the cap 10 may collide with the switching plate 71 and change its direction of movement. The switching plate 71 may include an upper switching plate having a substantially rectangular shape and a lower switching plate having a semicircular shape. The lower switching plate may be formed to have a radius corresponding to the radius of the flange 30 of the cap 10.

The side wall 72 may be formed perpendicular to the edge of the switching plate 71. In other words, the side wall 72 may be formed perpendicular to the switching plate 71 along the edge of the switching plate 71. The side wall 72 may not be formed on the entire circumference of the switching plate 71. In other words, the side wall 72 may not be formed on a portion of the switching plate 71.

For example, the side wall 72 may be formed on the lower side and both sides of the switching plate 71, and the side wall 72 may not be formed on the upper side of the switching plate 71. In detail, the side wall 72 may be formed on the edge of the lower switching plate and both sides of the upper switching plate. The side wall 72 may not be provided on the upper side of the upper switching plate. In other words, the upper side of the flow switching cover 70 is open.

Therefore, the air that collides with the switching plate 71 may move toward the upper side of the switching plate 71 where the side wall 72 is not formed.

The leading end 721 of the side wall 72 may be formed to be inserted into the outer leak-blocking portion 55 of the cap 10.

For example, the lower side wall 72b, e.g., the side wall 72b formed at the edge of the lower switching plate, may be formed as a curved surface corresponding to the curved surface of the outer leak-blocking portion 55 of the cap 10. The diameter of the outer surface of the leading end 721b of the lower side wall 72b and the diameter of the inner surface of the outer leak-blocking portion 55 of the cap 10 may be determined so that the leading end 721b of the lower side wall 72b may be fitted into the outer leak-blocking portion 55.

In addition, the upper side wall 72a extending from both ends of lower side wall 72b, e.g., the leading end 721a of the lower portion of the side wall 72a formed at both side edges of the upper switching plate 71a, may be inserted into both ends of the outer leak-blocking portion 55 of the cap 10.

When the leading end 721 of the side wall 72 of the flow switching cover 70 is fitted into the outer leak-blocking portion 55 of the cap 10, water may be prevented/blocked from leaking to the outside of the flow switching cover 70. Therefore, the side wall 72 of the flow switching cover 70 may function as a leakage blocking part.

The switching plate 71 may include a plurality of hook coupling portions 74. The plurality of hook coupling portions 74 may be configured to secure the flow switching cover 70 to the cap 10. Because the plurality of hook coupling portions 74 are identical or similar to the plurality of hook coupling portions 74 of the flow switching cover 70 of the filter assembly 1 according to the above-described embodiment, a detailed description thereof is omitted.

The flow switching cover 70 may include a cover support portion 80. The cover support portion 80 may be configured to support the filter 60. The cover support portion 80 may be configured to support the filter 60 while allowing air passing through the filter 60 to pass therethrough. Then, the filter 60 may be positioned between the cap fixing part 21 of the cap 10 and the cover support portion 80 of the flow switching cover 70.

The cover support portion 80 may be formed on the switching plate 71. The cover support portion 80 may be formed in the same direction as the side wall 72 on one surface of the switching plate 71.

For example, the cover support portion 80 may be formed with a plurality of support plates 81. The plurality of support plates 81 may be disposed perpendicular to the switching plate 71. The plurality of support plates 81 may be disposed parallel to each other at regular intervals on the switching plate 71. Air passing through the filter 60 may move through spaces between the plurality of support plates 81. In other words, the plurality of support plates 81 may guide the flow of air.

In this embodiment, the cover support portion 80 may include two support plates 81. Therefore, the air passing through the filter 60 may flow through the space between the two support plates 81.

The flow switching cover 70 may include a cover leak blocking portion 90. The cover leak blocking portion 90 may be configured to prevent/reduce water inside the flow switching cover 70 from flowing downward. The cover leak blocking portion 90 may be provided on the lower side of the cover support portion 80.

The cover leak blocking portion 90 may include a curved plate 92. The curved plate 92 may be formed in an approximately semi-cylindrical shape that contacts the lower ends of the plurality of support plates 81.

The curved plate 92 may be formed to have a curvature corresponding to the diameter of the filter 60. The curved plate 92 may be formed to have a curvature radius smaller than the diameter of the filter 60. In this case, the curved plate 92 may function as a cover support that supports the filter 60.

In addition, the curved plate 92 may be formed to have a curvature corresponding to the inner leak-blocking portion 50 of the cap 10. In other words, the curved plate 92 may be inserted into the inner leak-blocking portion 50 and may come into contact with the inner surface of the inner leak-blocking portion 50. Accordingly, the curved plate 92 may be formed to have a radius smaller than the radius of the inner surface of the inner leak-blocking portion 50. Then, the curved plate 92 of the flow switching cover 70 and the inner leak-blocking portion 50 of the cap 10 may overlap.

The cover leak blocking portion 90 may include a pair of inclined plates 93. The pair of inclined plates 93 may be disposed to be connected to both ends of the curved plate 92. In other words, one end of each of the pair of inclined plates 93 may be connected to the side wall 72 of the flow switching cover 70, and the other end thereof may be connected to each of both ends of the curved plate 92.

As described above, when the pair of inclined plates 93 are disposed between the curved plate 92 and both side walls 72 of the flow switching cover 70, water inside the flow switching cover 70 may flow downward along the inclined plates 93 and be accommodated in the curved plate 92. Therefore, water existing in the upper portion of the internal space of the flow switching cover 70 may not move to the lower side wall 72b of the flow switching cover 70.

In addition, because the inner leak-blocking portion 50 of the cap 10 is in contact with the lower portion of the curved plate 92, when water leaks from the curved plate 92, the water may be blocked by the inner leak-blocking portion 50 of the cap 10.

In addition, because the outer leak-blocking portion 55 of the cap 10 and the side wall 72 of the flow switching cover 70 are coupled to each other below the inner leak-blocking portion 50 of the cap 10, when water leaks from the inner leak-blocking portion 50 of the cap 10, the water may not leak to the outside of the flow switching cover 70.

The filter assembly 1 according to one or more embodiments of the disclosure having the above-described structure may include a plurality of leak-blocking structures, thereby preventing/blocking and/or reducing water from leaking out of the filter assembly 1.

The filter assembly 1 according to one or more embodiments of the disclosure having the above-described structure may remove washing foam and/or moisture vapor from air containing washing foam and/or moisture vapor discharged from the clothing treatment apparatus 100, thereby allowing the air to be discharged to the outside.

In addition, the filter assembly 1 according to one or more embodiments of the disclosure may prevent/reduce air passing through the filter 60 from colliding with a wall disposed behind the clothing treatment apparatus 100 and causing moisture to form on the wall.

In the foregoing, the disclosure has been shown and described with reference to various embodiments. However, it is understood by those skilled in the art that various changes may be made in form and detail without departing from the scope of the disclosure as defined by the appended claims and equivalents thereof.

## Claims

1. A filter assembly disposed in an air discharge pipe of a clothing treatment apparatus, the filter assembly comprising:
a cap configured to be fixed to a housing of the clothing treatment apparatus and connected to one end of the air discharge pipe;
a filter disposed in the cap and configured to filter and block foam and moisture vapor; and
a flow switching cover detachably disposed in the cap and configured to change a flow direction of air passing through the filter.

2. The filter assembly of claim 1, wherein
the cap comprises:
a connecting pipe configured to be coupled with the air discharge pipe;
a flange extending outward from one end of the connecting pipe and configured to be secured to the housing; and
a plurality of hooks formed on one surface of the flange in a direction opposite to the connecting pipe.

3. The filter assembly of claim 2, wherein
the flow switching cover comprises:
a switching plate facing the flange;
a side wall perpendicular to an edge of the switching plate; and
a plurality of hook coupling portions extending from the switching plate in a same direction as the side wall and to which the plurality of hooks are configured to be coupled.

4. The filter assembly of claim 2, wherein
the cap comprises a cap fixing part configured to fix the filter,
the flow switching cover comprises a cover support portion configured to support the filter, and
the filter is positioned between the cap fixing part and the cover support portion.

5. The filter assembly of claim 4, wherein
the cap fixing part comprises;
a lower cap fixing part configured to fix a lower portion of the filter; and
an upper cap fixing part configured to fix an upper portion of the filter.

6. The filter assembly of claim 5, wherein
the cap further comprises an inner leak-blocking portion extending from the flange in an opposite direction to the connecting pipe.

7. The filter assembly of claim 6, wherein
the cap further comprises an outer leak-blocking portion extending from an outer circumferential surface of the flange in a same direction as the inner leak-blocking portion.

8. The filter assembly of claim 6, wherein
the inner leak-blocking portion comprises a leak-blocking bump provided at a leading end of the inner leak-blocking portion.

9. The filter assembly of claim 8, wherein
the flow switching cover comprises a support bump formed at a lower end of the cover support portion and corresponding to the leak-blocking bump.

10. The filter assembly of claim 4, wherein
the cap fixing part is formed on an inner surface of the connecting pipe.

11. The filter assembly of claim 4, wherein
the flow switching cover further comprises a cover leak blocking portion provided at a lower end of the cover support portion.

12. The filter assembly of claim 4, wherein
the cover support portion comprises a plurality of support plates disposed in parallel at regular intervals.

13. The filter assembly of claim 12, wherein
two outermost support plates of the plurality of support plates include bending portions provided at leading ends of the two outermost support plates.

14. The filter assembly of claim 5, wherein
the upper cap fixing part comprises an upper fixing rib and a sub-fixing rib.

15. A clothing treatment apparatus comprising:
a housing including a cap hole;
a tub disposed inside the housing and including an air hole;
a filter assembly according to any one of claims 1 to 14 disposed in the cap hole of the housing; and
an air discharge pipe connecting the filter assembly and the air hole of the tub.
